# EUROPEAN PATENT APPLICATION

(11) **EP 4 514 018 A1**
(43) Date of publication of application: **26.02.2025**
(21) Application number: 23192599.1
(22) Date of filing: 22.08.2023
(51) Int. Cl.: H04W 72/0457, H04L 67/12, H04W 4/40

(54) **SYSTEM AND METHOD FOR HANDLING BANDWIDTH OF A WIRELESS COMMUNICATION LINK FOR A VEHICLE**

(71) Applicant: Volvo Autonomous Solutions AB, 405 08 Göteborg (SE)
(72) Inventor: Skillsäter, Calle, 644 36 Torshälla (SE); Sjöberg, Johan, 722 19 Västerås (SE)
(74) Representative: Valea AB

(57) **Abstract**

This disclosure relates to a computer system (700) for handling bandwidth of a wireless communication link (105) for a vehicle (100), wherein the computer system (700) comprises processing circuitry (702) configured to determine which state a latency critical system (103) of the vehicle (100) is in, and to, when the latency critical system (103) is determined to be in an active state, determine to limit a bandwidth of a wireless communication link (105) between the vehicle (100) and a wireless communication network (108) such that at least a part of the limited bandwidth is reserved for the latency critical system (103) in active state and a non-latency critical system is at least partly limited from consuming the limited bandwidth.

## Description

### TECHNICAL FIELD

The disclosure relates generally to a computer system, a computer-implemented method, a computer program product and a non-transitory computer-readable storage medium. In particular aspects, the disclosure relates to handling bandwidth of a wireless communication link for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Connectivity to a wireless communication network is a feature implemented in many vehicles. It is relevant for fully autonomous vehicles, for partly autonomous vehicles and for manually operated vehicles. Connectivity is relevant for a number of functions for a vehicle, for example uploading and downloading of data, navigation, safety, emergency etc.

Autonomous vehicles typically require wireless connectivity to communicate with the site control system and to secure getting/sending an emergency stop heartbeat signal.

In some cases there will be sections or areas along the vehicle's path where the connectivity capacity for some reason is limited. It may also be other situations when the bandwidth is consumed by other devices or vehicles in the network.

When the bandwidth consumption in a communication network is high, there is a significant risk of getting increased latency in the network in the form of latency spikes. This may be due to the fact that congestion is generated in the communication network since there is a higher demand for bandwidth than the communication network can manage. When the bandwidth is kept low, the latency is typically stable and low, and the latency spikes than when the wireless link is heavily loaded. This is important when it comes to mission critical communication such as E-stop since it will generate an automatic stop if the communication is dropped for a certain period of time.

Hence, there is a strive to develop further improved technology relating to connectivity for vehicles.

### SUMMARY

According to a first aspect of the disclosure, a computer system for handling bandwidth of a wireless communication link 105 for a vehicle is provided. The computer system comprises processing circuitry configured to:
- determine which state a latency critical system of the vehicle is in; and
- when the latency critical system is determined to be in an active state, determine to limit a bandwidth of a wireless communication link between the vehicle and a wireless communication network such that at least a part of the limited bandwidth is reserved for the latency critical system in active state and a non-latency critical system is at least partly limited from consuming the limited bandwidth.

The first aspect of the disclosure may seek to improve handling of bandwidth of a wireless communication link for the vehicle. A technical benefit may include that handling of bandwidth of a wireless communication link for the vehicle is improved. The possibility to limit the bandwidth increases robustness. It is ensured that communication to and from the latency critical system is prioritized, for example prioritized over other non-latency critical system. Communication to and from non-latency critical systems may be delayed or aborted in order for communication to and from activated latency critical systems to be conveyed. The bandwidth limitation is activated when the latency critical system is in the active state. A part of the available bandwidth may be dedicated and reserved for the latency critical system. Other part(s) of the available bandwidth may be used by other and non-latency critical system(s). Thus, communication to and/or from the latency critical system may be prioritized, and possibly also guaranteed to be transmitted. At least a part of the bandwidth may be reserved for the latency critical system, i.e. it may be only used by the latency critical system. The rest or other parts of the bandwidth may be used by other systems, e.g. non-latency critical systems

Optionally in some examples, including in at least one preferred example, the processing circuitry is further configured to, when the latency critical system is determined to be in an inactive state, determine to inactivate the bandwidth limitation or to continue with the inactivation of the bandwidth limitation.

A technical benefit may include that there is no bandwidth limitation when the latency critical system is in an inactive state, i.e. more bandwidth may be used when the latency critical system is in an inactive state. Thus, a non-latency critical system may be allowed to use bandwidth such that their communication may be conveyed.

Optionally in some examples, including in at least one preferred example, multiple latency critical systems of the vehicle may be in active state. The processing circuitry may be further configured to determine a priority associated with each of the multiple latency critical systems that are in active state. The processing circuitry may be further configured to determine to apply the bandwidth limitation to the latency critical systems in increasing priority order.

A technical benefit may be that latency critical systems with lower priority than latency critical systems with higher may be limited or prevented from using the bandwidth. Latency critical systems with highest priority or higher priority than the other latency critical systems may be granted access to the limited bandwidth. For example, first the non-latency critical system may be prevented from using the limited bandwidth, and then latency critical system with different priority may be prevented form using the limited bandwidth, starting with the latency critical system with lowest priority and then in increasing priority order.

Optionally in some examples, including in at least one preferred example, the bandwidth limitation may comprise one or more of: a bandwidth threshold that the bandwidth consumption should not exceed; and/or disabling upload and/or download of data having a size above a size threshold.

A technical benefit may include that it may be ensured that the maximum allowed bandwidth of the latency critical system may be limited to the bandwidth threshold, e.g. a safe threshold. The bandwidth threshold may be referred to as a target bandwidth threshold. Uploading and/or downloading data having a size above a size threshold may ensure that data below the size threshold may be prioritized such that it reaches its destination. Data above the size threshold may be, for example log data or navigation data, and may be examples of noncritical data which may tolerate a delayed delivery, i.e. until it has been determined that the latency critical system has been inactivated.

Optionally in some examples, including in at least one preferred example, the processing circuitry may be further configured to determine the bandwidth threshold by:
- performing N simulations of the vehicle's bandwidth consumption, wherein the N simulations are performed for M number of predefined bandwidth thresholds, and wherein N and M are positive integers;
- logging latency data for each simulation N;
- determining a maximum latency amongst the logged latency data; and
- if the maximum latency for simulation N is lower than a latency threshold, determining the bandwidth threshold to be the predefined bandwidth threshold used in simulation N.

A technical benefit may include that the bandwidth capacity is not static. Instead of setting a conservative value that would work in most cases, such as bad weather conditions, when vegetation is wet etc., the determining of the bandwidth threshold may open up for dynamically setting a bandwidth threshold so that a higher bandwidth can be utilized when possible.

Optionally in some examples, including in at least one preferred example, the processing circuitry may be further configured to dynamically set the bandwidth threshold based on available bandwidth or predicted bandwidth.

A technical benefit may include that the bandwidth capacity may be set less conservative. Instead of setting a conservative value that would work in most cases, such as bad weather conditions, when vegetation is wet etc., the determining of the bandwidth threshold may open up for setting a dynamic threshold so that a higher bandwidth can be utilized when possible.

Optionally in some examples, including in at least one preferred example, the processing circuitry may be further configured to:
- monitor latency during the vehicle's bandwidth consumption;
- determine to reduce the bandwidth threshold when the monitored latency is above a latency threshold; and to
- determine to increase the bandwidth threshold when the monitored latency is constant or reduced.

A technical benefit may include that the bandwidth consumption is not static. Instead of setting a conservative value that would work in most cases, such as bad weather conditions, when vegetation is wet etc., the determining of the bandwidth threshold may open up for setting a dynamic threshold so that a higher bandwidth can be utilized when possible.

Optionally in some examples, including in at least one preferred example, the processing circuitry may be further configured to determine the state of the latency critical system based on state information obtained from the latency critical system.

A technical benefit may include that since the state information is obtained from the latency critical system itself, the state information may always be correct and reliable. Thus, the activation of the bandwidth limitation may be performed based on correct and reliable state information, i.e. there may not be any unnecessary or incorrect activation of the bandwidth limitation.

Optionally in some examples, including in at least one preferred example, the latency critical system may be an emergency stop system or a tele operation system or a real time system.

A technical benefit may include that systems such as the emergency stop system or a tele operation system or a real time system may be ensured to get bandwidth when they are activated.

According to a second aspect of the disclosure, a vehicle is provided. The vehicle comprises the computer system of the first aspect and a latency critical system.

The second aspect of the disclosure may seek to improve handling of bandwidth of a wireless communication link for the vehicle. A technical benefit may include that handling of bandwidth of a wireless communication link for the vehicle is improved.

Technical benefits of the second aspect of the disclosure are largely analogous to the technical benefits of the first aspect of the disclosure. It shall also be noted that all examples of the first aspect of the disclosure are applicable to and combinable with all examples of the second aspect of the disclosure, and vice versa.

According to a third aspect of the disclosure, a computer-implemented method for handling bandwidth of a wireless communication link for a vehicle is provided. The method comprises:
- determining, by processing circuitry of a computer system, which state a latency critical system of the vehicle is in; and
- when the latency critical system is determined to be in an active state, determining, by the processing circuitry, to limit a bandwidth of a wireless communication link between the vehicle and a wireless communication network such that at least a part of the limited bandwidth is reserved for the latency critical system in active state and a non-latency critical system is at least partly limited from consuming the limited bandwidth.

Optionally in some examples, including in at least one preferred example, the method may further comprise:
- when the latency critical system is determined to be in an inactive state, determining, by the processing circuitry, to inactivate the bandwidth limitation or to continue with the inactivation of the bandwidth limitation.

Optionally in some examples, including in at least one preferred example, multiple latency critical systems of the vehicle may be in active state. The processing circuitry may be further configured to determine a priority associated with each of the multiple latency critical systems that are in active state. The processing circuitry may be further configured to determine to apply the bandwidth limitation to the latency critical systems in increasing priority order.

Optionally in some examples, including in at least one preferred example, the bandwidth limitation may comprise one or more of:
- a bandwidth threshold that the bandwidth consumption should not exceed; and/or
- disabling upload and/or download of data having a size above a size threshold.

Optionally in some examples, including in at least one preferred example, the method may further comprise:
- determining, by the processing circuitry, the bandwidth threshold by:
- performing N simulations of the vehicle's bandwidth consumption, wherein the N simulations are performed for M number of predefined bandwidth thresholds, and wherein N and M are positive integers;
- logging latency data for each simulation N;
- determining a maximum latency amongst the logged latency data; and
- if the maximum latency for simulation N is lower than a latency threshold, determining the bandwidth threshold to be the predefined bandwidth threshold used in simulation N.

Optionally in some examples, including in at least one preferred example, the method may further comprise:
- dynamically setting, by the processing circuitry, the bandwidth threshold based on available bandwidth or predicted bandwidth.

Optionally in some examples, including in at least one preferred example, the method may further comprise:
- monitoring, by the processing circuitry, latency during the vehicle's bandwidth consumption;
- determining, by the processing circuitry, to reduce the bandwidth threshold when the monitored latency is above a latency threshold; and
- determining, by the processing circuitry, to increase the bandwidth threshold when the monitored latency is constant or reduced.

Optionally in some examples, including in at least one preferred example, the latency critical system may be an emergency stop system or a tele operation system or a real time system.

The third aspect of the disclosure may seek to improve handling bandwidth of a wireless communication link for the vehicle. A technical benefit may include that handling of bandwidth of a wireless communication link for the vehicle is improved.

Technical benefits of the third aspect of the disclosure are largely analogous to the technical benefits of the first aspect and the second aspect of the disclosure. It shall also be noted that all examples of the first aspect and the second aspect of the disclosure are applicable to and combinable with all examples of the third aspect of the disclosure, and vice versa.

According to a fourth aspect of the disclosure, a computer program product is provided. The computer program product comprises program code for performing, when executed by a processing circuitry, the method of the third aspect.

The fourth aspect of the disclosure may seek to improve handling of bandwidth of a wireless communication link for the vehicle. A technical benefit may include that handling of bandwidth of a wireless communication link for the vehicle is improved.

Technical benefits of the fourth aspect of the disclosure are largely analogous to the technical benefits of the first aspect, the second aspect and the third aspect of the disclosure. It shall also be noted that all examples of the first aspect, the second aspect and the third aspect of the disclosure are applicable to and combinable with all examples of the fourth aspect of the disclosure, and vice versa.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect.

The fifth aspect of the disclosure may seek to improve handling of bandwidth of a wireless communication link for the vehicle. A technical benefit may include that handling of bandwidth of a wireless communication link for the vehicle is improved.

Technical benefits of the fifth aspect of the disclosure are largely analogous to the technical benefits of the first aspect, the second aspect, the third aspect and the fourth aspect of the disclosure. It shall also be noted that all examples of the first aspect, the second aspect, the third aspect and the fourth aspect of the disclosure are applicable to and combinable with all examples of the fifth aspect of the disclosure, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle, according to an example.
**FIG. 2** is an exemplary block diagram illustrating a latency critical system, a computer system and a vehicle, according to an example.
**FIG. 3a** is a graph illustrating Round Trip Time (RTT), according to an example.
**FIG. 3b** is a graph illustrating throughput, according to an example.
**FIG. 3c** is a graph illustrating RTT, according to an example.
**FIG. 3d** is a graph illustrating throughput, according to an example.
**FIG. 4a** is a graph illustrating RTT, according to an example.
**FIG. 4b** is a graph illustrating RTT, according to an example.
**FIG. 5** are graphs illustrating latency and bandwidth, according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

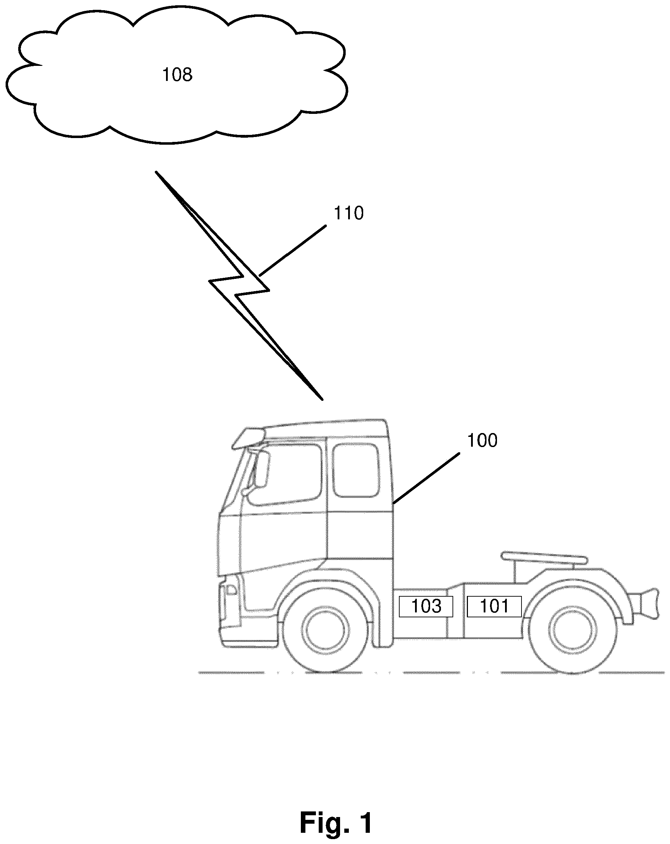

**FIG. 1** is an exemplary drawing illustrating a vehicle **100** according to an example. The vehicle **100** may be a heavy-duty vehicle such as truck, bus, marine vessel and construction equipment, among other vehicle types. Although the disclosure may be described with respect to a particular vehicle, the disclosure is not restricted to any particular vehicle.

The vehicle **100** may be a fully autonomously operated vehicle, a partly autonomously operated vehicle or a manually operated vehicle.

The vehicle **100** may be fully or partly electrically driven, or it may be driven by a combustion engine.

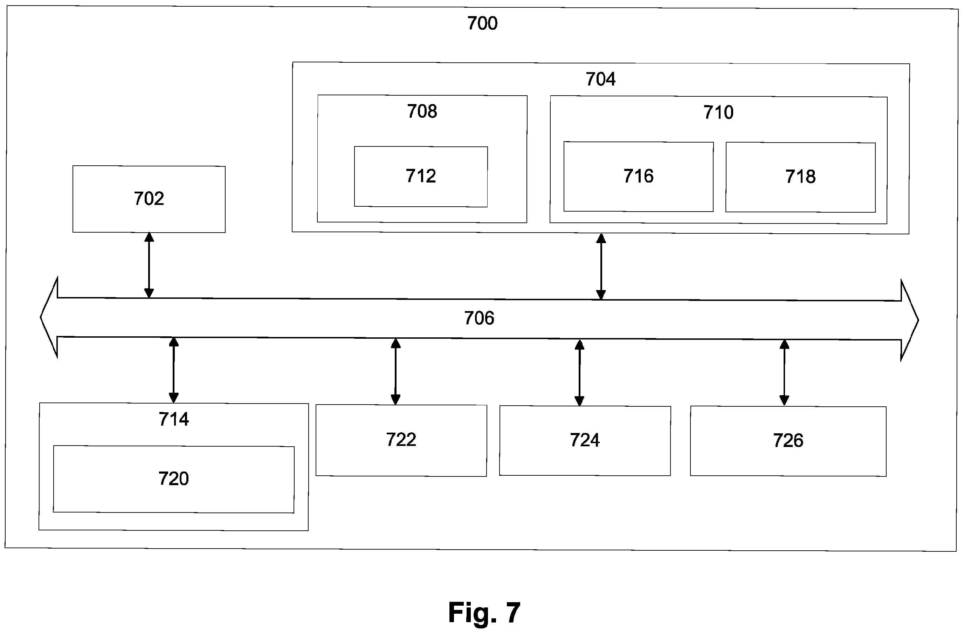

The vehicle **100** comprises a vehicle control system **101**. The vehicle control system **101** is arranged to at least partly control the vehicle **100**. The vehicle control system **101** may be a processing circuitry **702** or it may be comprised in the processing circuitry **702**, and the processing circuitry **702** may be comprised in a computer system **700**. Reference numbers **700** and **702** are seen in **FIG. 7**, which will be described later. The vehicle control system **101** may be completely comprised in the vehicle **100,** or a first part of the vehicle control unit **101** may be comprised in the vehicle **100** and a second part of the vehicle control system **101** may be comprised in an offboard system or offboard unit which is offboard the vehicle **100**.

The vehicle **100** may comprise at least a part of a latency critical system **103** or the vehicle **100** may be arranged to communicate with a latency critical system **103** located offboard the vehicle **100**. When the vehicle **100** comprises at least a part of the latency critical system **103**, the vehicle **100** may comprise the whole latency critical system **103**, or a first part of the latency critical system **103** may be comprised in the vehicle **100** and a second part of the latency critical system **103** may be comprised in another system or unit, for example at a different location compared to the location of the vehicle **100**. The vehicle **100** may comprise one or more latency critical systems **103**. In other words, the vehicle **100** comprises *n* number of latency critical systems **103**, where *n* is a positive integer. In addition to the latency critical system **103**, the vehicle **103** may comprise one or more non-latency critical systems. In other words, the vehicle **100** may comprise *m* number of non-latency critical systems, where *m* is a positive integer.

The latency critical system **103** may be described as a system where an increased latency leads to severe system degradation.

The latency critical system **103** may be for example an emergency stop system or a tele operation system or a real time system. An emergency stop system may be arranged to stop the vehicle **100** when an emergency condition has occurred, for example the emergency stop system may be arranged to stop the vehicle **100** if a heartbeat signal is not received on time. A tele operation system may be arranged to operate the vehicle 100 at a distance, i.e. remote control of the vehicle **100.** In a tele operation system, a too large latency will mean that the vehicle **100** is at least partly undrivable since it is very difficult to control something if the time it takes to influence the system gets too long. A real time system may be a system arranged to operate in real time. The latency critical system **103** may be arranged to have reduced functionality in case of high latency. Thus, it is necessary to ensure that the latency critical system **103** does not have reduced functionality when it is activated. In other words, the latency critical system **103** is arranged to function in an optimal way or at least as optimal as possible when the latency is stable and low, e.g. when the latency is at or below a latency threshold. The vehicle **100** may comprise one or more of the exemplified latency critical systems **103.**

The latency critical system **103** may be associated with a priority or it may have a priority. The priority is related to the bandwidth limitation in that a low priority indicates that the associated latency critical system **103** may not be prioritized for being allowed to access the limited bandwidth, and a high priority indicates that the associated latency critical system **103** may be prioritized for being allowed to access the limited bandwidth. A latency critical system with high priority may be allowed to access the limited bandwidth before a latency critical system **103** with low priority. Using other words, the bandwidth may be limited for low priority latency critical systems priority to for high priority latency critical systems. Consequently, the priority for multiple latency critical system **103** may be compared in order to determine which of them should be allowed to access the limited bandwidth and which should not be allowed to access the limited bandwidth. Before limiting the bandwidth for latency critical systems **103** with low priority, the bandwidth for non-latency critical systems may be limited.

For example, an emergency stop system may have the highest priority amongst all latency critical systems **103** in the vehicle **100**. The tele operation system may have a lower priority than the emergency stop system. The real time system may have a priority which may be lower than both the emergency stop system and the tele operation system.

The vehicle **100** is arranged to communicate with a wireless communication network **108** via a wireless communication link **110.** The wireless communication network **108** may be completely located offboard the vehicle **100** or it may be at least partly located offboard the vehicle **100**. The wireless communication network **108** may comprise at least part of the vehicle control system **101**, or the wireless communication network **108** does not comprise any part of the vehicle control system **101.** The wireless communication link **100** has a certain bandwidth.

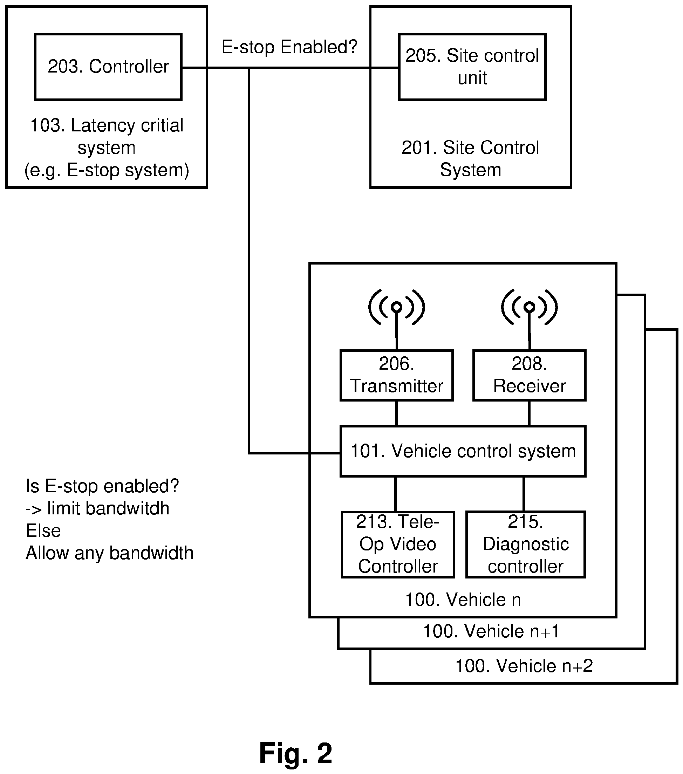

**FIG. 2** is an exemplary block diagram illustrating the latency critical system **103**, the vehicle **100** and a site control system **201.**

The latency critical system **103** may be, for example, an emergency stop (e-stop) system. The latency critical system **103** may comprise a controller **203** arranged to control the latency critical system **103**, for example to control the state of the latency critical system **103**. The controller **203** may be, for example, an e-stop controller. The latency critical system **103** may be in an active state or an inactive state. The active state may be referred to as an enabled state, an on state, a connected state etc. The inactive state may be referred to as a disabled state, an off state, a disconnected state etc. In the example of the emergency stop system in **FIG. 2**, the controller **203** may for example be an emergency stop Programmable Logic Controller (PLC). The latency critical system **103** may comprise an onboard part and an offboard part, and these parts may send heartbeat signals between them.

**FIG. 2** illustrates the site control system **201**, and the term site refers to the site or area which the site control system is arranged to control. The site control system may be arranged to control one or more vehicles **100** located at the site or associated with the site. The site control system **201** may comprise a site control unit **205.** The site control system **201** is located offboard the vehicle **100.** The site control system **201** may be completely comprised in the wireless communication network **108**, or a first part of the site control system **201** may be comprised in the wireless communication network **108** and a second part of the site control system **201** may be comprised in another network or system.

The control unit **210** may be a processing circuitry **702** or it may be comprised in the processing circuitry **702**, and the processing circuitry **702** may be comprised in a computer system **700**. Reference numbers **700** and **702** are seen in **FIG. 7**, which will be described later.

The latency critical system **103** and the site control system **201** are arranged to communicate with each other. For example, information indicating the state of the latency critical system **103** may be provided from the latency critical system **103** to the site control system **201.** The information indicating the state of the latency critical system **103** may be provided upon request from the site control system **201**, at regular time intervals, at irregular time intervals, when the state has changed, or at any other suitable time. In the example of **FIG. 2****,** the site control system **201** may send a request to the e-stop system **103** asking if the E-stop is enabled, and the E-stop system **103** may send a response indicating whether or not it is enabled or disabled. If the E-stop is enabled, then the bandwidth may be limited. If the E-stop is not enabled, i.e. it is disabled, any bandwidth may be allowed.

**FIG. 2** illustrates a number of vehicles **100** located at or associated with a site. In the example of **FIG. 2****,** three vehicles **100** are exemplified, i.e. vehicle n, vehicle n+1 and vehicle n+2, where n is a positive integer. Note that the number of vehicles in **FIG. 2** is only an example and that any number of vehicles may be located at or associated with the site. Each vehicle **100** may comprise one or more of: a transmitter **206,** a receiver **208,** the vehicle control system **101,** a tele operations video controller **213** and a diagnostic controller **215**. Instead of a separate transmitter **206** and receiver **208**, the vehicle **100** may comprise a transceiver arranged to perform both transmitting and receiving operations. The tele operations video controller **213** may be arranged to control or to assist in tele operations of the vehicle **100**, e.g. remote control of the vehicle **100.** The diagnostic controller **215** may be arranged to perform diagnostics operations on the vehicle **100.** The vehicle control system **101** comprised in the vehicle **100** may be arranged to control at least part of the vehicle **100.**

The latency critical system **103**, the site control system **201** and the vehicle **100** may be arranged to communicate with each other. The controller **203** comprised in the latency critical system **103**, the site control unit **205** and the vehicle control system **201** may be arranged to communicate with each other.

With this disclosure, the bandwidth consumption is actively limited when latency critical communication such as E-stop is in active state, i.e. when it is turned on. By letting the latency critical system **103** send a signal to the site control system **201** that it is in an active state and this information is then used to set a threshold of the bandwidth.

One example may be that the maximum allowed bandwidth of a latency critical system **103** such as the tele operation system is limited to a safe threshold when the E-stop is active or that upload and/or download of large files is disabled. Examples of large files may be for example logdata or navigation data etc. A file may be large when it exceeds a size threshold. When the E-stop system is disabled, the bandwidth limitation may be turned off and more bandwidth can be used.

The interface between the controller **203** comprised in the latency critical system vehicle control system **103,** typically a safety PLC, and the site control unit **205** may be either an electrical signal, e.g. 24V, or a communication interface such as CAN or IP-based protocol. The information between the controller **203** and the site control unit **205** may either be sent directly from the controller **203** to the vehicle **100** or relayed and/or distributed by the site control unit **205** to the vehicle **100**, e.g. to the vehicle control system **101**.

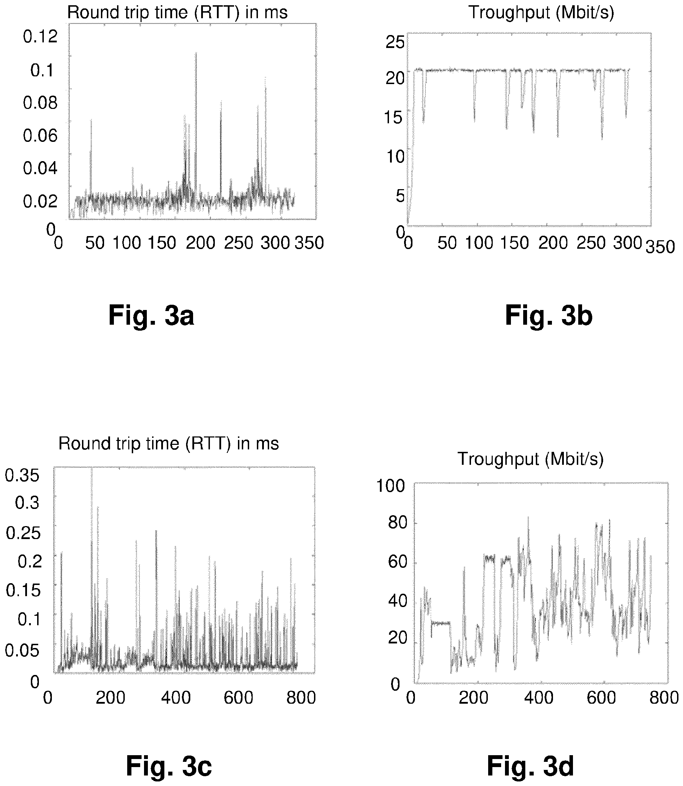

As mentioned earlier, bandwidth consumption and latency are parameters that may influence the connectivity for the vehicle **100.** **FIG. 3a** is a graph illustrating the Round Trip Time (RTT) in ms and **FIG. 3b** is a graph illustrating the throughput in Mbit/s for **FIG. 3a**. **FIG. 3c** is a graph illustrating the RTT in ms and **FIG. 3d** is a graph illustrating the throughput in Mbit/s for **FIG. 3c**. As seen in **FIG. 3a, 3b, 3c and 3d****,** latency spikes occur when the wireless communication network is heavily loaded. From this, it is shown that it may be necessary to determine a suitable bandwidth threshold.

The bandwidth threshold, i.e. the first threshold, may wither be used during commissioning of the computer system **700**, but also for monitoring the network performance during operation to enable adaptation to a better bandwidth threshold.

The computer system **700** may simulate traffic at specific bandwidth thresholds, e.g. 5/10/20/30/40/50/etc. Mbit/s, and the simulation data may be evaluated.

The computer system **700** may run a test sequency where different bandwidth thresholds are iterated, and the network latency is logged simultaneously. If there is no significant drop in latency between two or more different iterations, it can be concluded that the bandwidth is no longer affecting the latency and the congestion is no longer present. The alternative may be that the latency is dropped below an acceptable threshold.

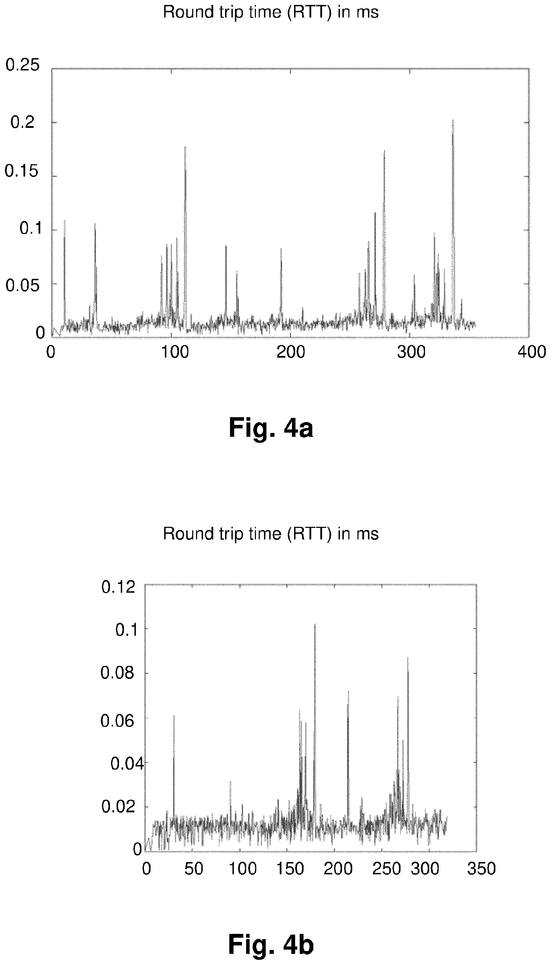

**FIG. 4a** is a graph illustrating RTT in ms for 30 Mbit/s throughput and **FIG. 4b** is a graph illustrating RTT in ms for 20 Mbit/s throughput. As seen in **FIG. 4a and FIG.4****,** the latency drops significantly when the bandwidth is limited to 20 Mbit/s instead of 30 Mbit/s. Assuming an acceptable limit of 120 ms, then the conclusion may be that 20 Mbit/s is a suitable bandwidth limitation. And if another test at for example 10 Mbit/s is performed and this shows no major drop compared to 20Mbit/s, the conclusion is still that 20 Mbit/s is a suitable limit.

This may be summarized as follows:
a) Simulate bandwidth usage at predefined bandwidth thresholds and log latency for each test N.
b) Detect maximum latency for logged set of samples.
c) If maximum latency for iteration N < required latency, set bandwidth threshold to bandwidth threshold used in test N.

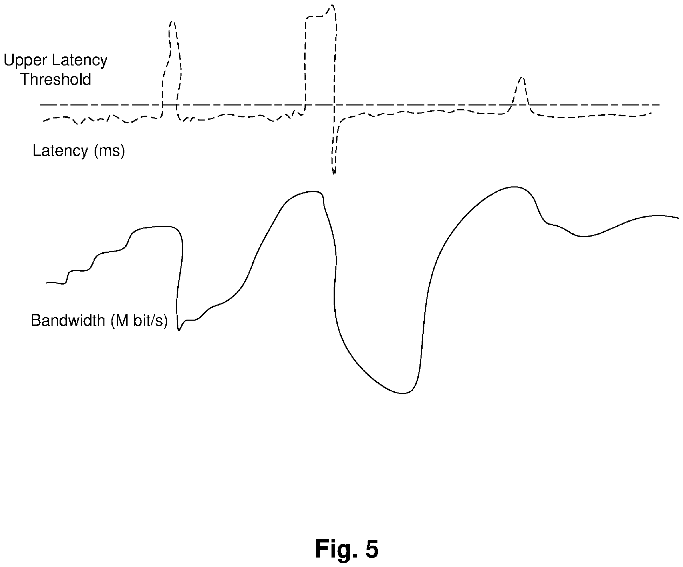

Latency may be monitored continuously during runtime. If a latency spike above a predefined limit is detected, then the bandwidth/link utilization can be limited to minimize the risk of latency spikes. This may be performed by increasing the bandwidth threshold value until an increase is detected in latency. This may be executed in real time. When a spike in latency is detected, i.e. it is over the upper latency threshold value illustrated with the dotted horizontal line in **FIG. 5****,** the bandwidth threshold may be immediately dropped. If there is no increase in latency detected, the threshold may instead be increased. **FIG. 5** illustrates two graphs where the top graph illustrates latency in ms, and the bottom graph illustrates bandwidth in Mbit/s.

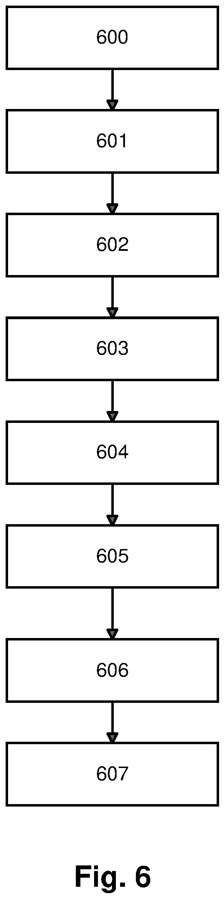

**FIG. 6** is a flow chart of a method according to an example. The method is a computer-implemented method. The method is performed by a processing circuitry **702** of a computer system **700**. The processing circuitry **702** may be comprised in the vehicle control system **101** or the processing circuitry **702** may be the vehicle control system **101**, or a first part of the processing circuitry **702** may be comprised in the vehicle control system **101** and a second part of the processing circuitry **702** may be comprised in the site control system **201**. The method comprises at least one of the following steps, which steps may be performed in any suitable order than described below:

Step **600:** The processing circuitry **702** of a computer system **700** determines which state a latency critical system **103** of the vehicle **100** is in. The state may be an active state or an inactive state. A part of the available bandwidth of the wireless communication link 105 may be available for consumption when the bandwidth limitation is activated. The latency critical system **103** may be an emergency stop system or a tele operation system or a real time system. If the vehicle **100** comprises multiple latency critical systems **103**, then step **600** may comprise to determine the state of each of the multiple latency critical systems **103**. If the vehicle **100** comprises multiple latency critical systems **103**, then these systems may comprise the same state or different states.

The state may be determined by obtaining information indicating the state from for example the latency critical system **103** itself, from a memory arranged to store information indicating the state, from the vehicle **100**, from the vehicle control system **101** or from any other system or unit arranged to comprise information indicating the state. The information indicating the state may be obtained as a result of a request transmitted by the processing circuitry **702**, it may be obtained without any transmitted request, it may be pushed to the processing circuitry **702** by the sender, it may be obtained at regular time intervals, at irregular time intervals, it may be obtained when a state change has occurred etc.

Step **601:** The processing circuitry **702** may determine the bandwidth threshold by:
- performing N simulations of the vehicle's **100** bandwidth consumption, wherein the N simulations are performed for M number of predefined bandwidth thresholds, and wherein N and M are positive integers;
- logging latency data for each simulation N;
- determining a maximum latency amongst the logged latency data; and
- if the maximum latency for simulation N is lower than a latency threshold, determining the bandwidth threshold to be the predefined bandwidth threshold used in simulation N.

The bandwidth threshold may be determined at any suitable time instance, for example, before step **600**, at the same time as step **600** is performed,

Step **602:** The processing circuitry **702** may dynamically set the bandwidth threshold based on available bandwidth or predicted bandwidth. Thus, the processing circuitry **702** may previously have obtained information about the available bandwidth or predicted bandwidth. The predicted bandwidth may be referred to as an estimated bandwidth. The dynamically setting of the bandwidth threshold may be done instead of the list above in step **601**, or it may be done as a part of the bulleted list above in step **601**. Step **602** may be a sub step of step **601,** or it may be a separate step.

Step **603:** When the latency critical system **103** is determined to be in an active state, the processing circuitry **702** determines to limit the bandwidth of the wireless communication link **105** between the vehicle **100** and a wireless communication network **108**. When the bandwidth is limited, at least a part of the limited bandwidth is reserved for the latency critical system **103** in active state and a non-latency critical system is at least partly limited from consuming the limited bandwidth. Thus, the limitation of the bandwidth comprises reserving at least a part of the limited bandwidth for the latency critical system **103** in active state, and to at least partly limit the non-latency critical system from consuming the limited bandwidth. Thus, the limited bandwidth should be used by only the latency critical system **103**, or the latency critical system **103** may be prioritized for bandwidth consumption over non-latency critical systems. Reserving he limited bandwidth for the latency critical system **103** may be described as the limited bandwidth being dedicated for the latency critical system **103,** e.g. the latency critical system **103**, having highest priority amongst multiple latency critical systems **103**.

The bandwidth limitation may comprise one or more of:
- a bandwidth threshold that the bandwidth consumption should not exceed; and/or
- disabling upload and/or download of data having a size above a size threshold.

The size threshold may be predetermined and information about the size threshold may be obtained by the processing circuitry **702** at some earlier time instance.

As mentioned earlier, multiple latency critical system **103** of the vehicle **100** may be in actives state. The processing circuitry **702** may determine the priority associated with each of the latency critical systems amongst the multiple latency critical systems **103** that are in actives state. The processing circuitry **702** may determine to apply the bandwidth limitation to the latency critical systems **103** in increasing priority. When the priority is applied, the priority of the latency critical systems **103** may be compared to each other. The result of the comparison may provide a list of latency critical system **103** that is sorted in increasing priority order. The latency critical system **103** with lowest priority may be first prevented from using the limited bandwidth, then the second lowest priority may be prevented from using the limited bandwidth. The latency critical system **103** with highest priority may not be limited form using bandwidth, i.e. it may always be allowed to use the limited bandwidth.

Step **604:** The processing circuitry **702** may monitor latency during the vehicle's bandwidth consumption. The monitoring may be a continuous monitoring, or it may be performed at regular or irregular time intervals.

Step **605:** The processing circuitry **702** may determine to reduce the bandwidth threshold when the monitored latency is above a latency threshold. The latency threshold may be predetermined and information about the latency threshold may be obtained by the processing circuitry **702** at some earlier time instance.

Step **606:** The processing circuitry **702** may determine to increase the bandwidth threshold when the monitored latency is constant or reduced. The processing circuitry **702** may determine to increase the bandwidth threshold with a predetermined amount, and information about the predetermined amount may be obtained by the processing circuitry **702** at some earlier time instance.

Step **607:** When the latency critical system **103** is determined to be in an inactive state, the processing circuitry **702** may determine, to inactivate the bandwidth limitation or to continue with the inactivation of the bandwidth limitation. Thus, if the bandwidth limitation is currently active, then step **607** may involve deactivating the bandwidth limitation such that the full bandwidth of the wireless communication link may be used. If the bandwidth limitation is currently inactive, then step **607** may involve that the bandwidth limitation continues to be inactive, i.e. the full or substantially the full bandwidth of the wireless communication link continues to be used. The processing circuitry **702** may determine that the latency critical system **103** is in inactive state based on state information obtained directly from for example the latency critical system **103** or via an intermediate unit or system, e.g. a memory unit, it may be obtained from the vehicle **100,** the vehicle control system **101** or by any other suitable unit.

In order to further improve technology relating to connectivity for vehicles **100,** a computer system **700** for handling bandwidth of a wireless communication link for the vehicle **100** is provided. The computer system **700** comprises processing circuitry **702** configured to determine which state a latency critical system **103** of the vehicle **100** is in. The processing circuitry **702** is configured to, when the latency critical system **103** is determined to be in an active state, determine to limit a bandwidth of a wireless communication link **105** between the vehicle **100** and a wireless communication network **108** such that at least a part of the limited bandwidth is reserved for the latency critical system in active state and a non-latency critical system is at least partly limited from consuming the limited bandwidth.. The latency critical system **103** may be an emergency stop system or a tele operation system or a real time system.

Multiple latency critical systems **103** of the vehicle **100** may be in active state. The processing circuitry **702** may be configured to determine a priority associated with each of the latency critical systems **103** that are in active state and to determine to apply the bandwidth limitation to the latency critical systems in increasing priority order.

The bandwidth limitation may comprise one or more of:
- a bandwidth threshold that the bandwidth consumption should not exceed; and/or
- disabling upload and/or download of data having a size above a size threshold.

The processing circuitry **702** may be further configured to determine the bandwidth threshold by:
- performing N simulations of the vehicle's **100** bandwidth consumption, wherein the N simulations are performed for M number of predefined bandwidth thresholds, and wherein N and M are positive integers;
- logging latency data for each simulation N;
- determining a maximum latency amongst the logged latency data; and
- if the maximum latency for simulation N is lower than a latency threshold, determining the bandwidth threshold to be the predefined bandwidth threshold used in simulation N.

The processing circuitry **702** may be further configured to dynamically set the bandwidth threshold based on available bandwidth or predicted bandwidth.

The processing circuitry **702** may be further configured to, when the latency critical system **103** is determined to be in an inactive state, determine to inactivate the bandwidth limitation or to continue with the inactivation of the bandwidth limitation.

The processing circuitry **702** may be further configured to monitor latency during the vehicle's bandwidth consumption, determine to reduce the bandwidth threshold when the monitored latency is above a latency threshold, and to determine to increase the bandwidth threshold when the monitored latency is constant or reduced.

The processing circuitry **702** may be further configured to determine the state of the latency critical system **103** based on state information obtained from the latency critical system **103**.

The vehicle **100** comprises the computer system **700** described herein and the latency critical system **103**.

The vehicle **100** may comprise one or multiple latency critical systems **103**. The vehicle **100** may comprise one or multiple non-latency critical systems.

A computer program product comprises program code for performing, when executed by a processing circuitry **702**, the method of **FIG.6**.

A non-transitory computer-readable storage medium comprising instructions, which when executed by a processing circuitry **702**, cause the processing circuitry **702** to perform the method of **FIG. 6**.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, a control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704**, and a system bus **706**. The computer system **700** may include at least one computing device having the processing circuitry **702**. The system bus **706** provides an interface for system components including, but not limited to, the memory **704** and the processing circuitry **702**. The processing circuitry **702** may include any number of hardware components for conducting data or signal processing or for executing computer code stored in memory **704**. The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700**.

The computer system **700** may further include or be coupled to a non-transitory computer-readable storage medium such as the storage device **714**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710**, which may include an operating system **716** and/or one or more program modules **718**. All or a portion of the examples disclosed herein may be implemented as a computer program **720** stored on a transitory or non-transitory computer-usable or computer-readable storage medium (e.g., single medium or multiple media), such as the storage device **714**, which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702**. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702**. The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system **700** for handling bandwidth of a wireless communication link **105** for the vehicle **100**, wherein the computer system **700** comprises processing circuitry **702** configured to:
- determine which state a latency critical system **103** of the vehicle **100** is in; and
- when the latency critical system **103** is determined to be in an active state, determine to limit the bandwidth of the wireless communication link **105** between the vehicle **100** and a wireless communication network **108** such that at least a part of the limited bandwidth is reserved for the latency critical system **103** in active state and a non-latency critical system is at least partly limited from consuming the limited bandwidth.

**Example 2:** The computer system **600** of example 1, wherein the processing circuitry **602** is further configured to, when the latency critical system **103** is determined to be in an inactive state, determine to inactivate the bandwidth limitation or to continue with the inactivation of the bandwidth limitation.

**Example 3**: The computer system **700** of any of the preceding examples, wherein multiple latency critical systems **103** of the vehicle **100** are in active state. The processing circuitry **702** may be further configured to determine a priority associated with each of the latency critical systems that are in active state and to determine to apply the bandwidth limitation to the latency critical systems **103** in increasing priority order.

**Example 4**: The computer system **700** of any of the preceding examples, wherein the bandwidth limitation comprises one or more of:
- a bandwidth threshold that the bandwidth consumption should not exceed; and/or
- disabling upload and/or download of data having a size above a size threshold.

**Example 5**: The computer system **700** of example 4, wherein the processing circuitry **702** is further configured to determine the bandwidth threshold by:
- performing N simulations of the vehicle's **100** bandwidth consumption, wherein the N simulations are performed for M number of predefined bandwidth thresholds, and wherein N and M are positive integers;
- logging latency data for each simulation N;
- determining a maximum latency amongst the logged latency data; and
- if the maximum latency for simulation N is lower than a latency threshold, determining the bandwidth threshold to be the predefined bandwidth threshold used in simulation N.

**Example 6**: The computer system **700** of any of examples 4-5, wherein the processing circuitry **702** is further configured to dynamically set the bandwidth threshold based on available bandwidth or predicted bandwidth.

**Example 7**: The computer system **700** of any of examples 4-6, wherein the processing circuitry **702** is further configured to:
- monitor latency during the vehicle's bandwidth consumption;
- determine to reduce the bandwidth threshold when the monitored latency is above a latency threshold; and to
- determine to increase the bandwidth threshold when the monitored latency is constant or reduced.

**Example 8**: The computer system **700** of any of the preceding examples, wherein the processing circuitry **702** is further configured to determine the state of the latency critical system **103** based on state information obtained from the latency critical system **103**.

**Example 9**: The computer system **700** of any of the preceding examples, wherein the latency critical system **103** is an emergency stop system or a tele operation system or a real time system.

**Example 10:** A vehicle **100** comprising the computer system **700** of any of examples 1-9 and a latency critical system **103**.

**Example 11**: A computer-implemented method for handling bandwidth of a wireless communication link **105** for the vehicle **100**, the method comprising:
- determining **600**, by processing circuitry **702** of a computer system **700**, which state a latency critical system **103** of the vehicle **100** is in; and
- when the latency critical system **103** is determined to be in an active state, determining **603**, by the processing circuitry **702**, to limit the bandwidth of the wireless communication link **105** between the vehicle **100** and a wireless communication network **108** such that at least a part of the limited bandwidth is reserved for the latency critical system **103** in active state and a non-latency critical system is at least partly limited from consuming the limited bandwidth.

**Example 12**: The method of example 11, further comprising:
- when the latency critical system **103** is determined to be in an inactive state, determining **607**, by the processing circuitry **702**, to inactivate the bandwidth limitation or to continue with the inactivation of the bandwidth limitation.

**Example 13:** The method of any of examples 11-12, wherein multiple latency critical systems **103** of the vehicle **100** are in active state. The method further comprises:
- determining, by the processing circuitry **702,** a priority associated with each of the latency critical systems that are in active state; and
- determining, by the processing circuitry **702,** to apply the bandwidth limitation to the latency critical systems **103** in increasing priority order.

**Example 14:** The method of any of examples 11-13, wherein the bandwidth limitation comprises one or more of:
- a bandwidth threshold that the bandwidth consumption should not exceed; and/or
- disabling upload and/or download of data having a size above a size threshold.

**Example 15**: The method of example 14, further comprising:
- determining **601**, by the processing circuitry **702**, the bandwidth threshold by:
   - performing N simulations of the vehicle's **100** bandwidth consumption, wherein the N simulations are performed for M number of predefined bandwidth thresholds, and wherein N and M are positive integers;
   - logging latency data for each simulation N;
   - determining a maximum latency amongst the logged latency data; and
   - if the maximum latency for simulation N is lower than a latency threshold, determining the bandwidth threshold to be the predefined bandwidth threshold used in simulation N.

**Example 16**: The method of any of examples 14-15, further comprising:
- dynamically setting **602**, by the processing circuitry **702**, the bandwidth threshold based on available bandwidth or predicted bandwidth.

**Example 17**: The method of any of examples 14-16, further comprising:
- monitoring **604**, by the processing circuitry **702**, latency during the vehicle's bandwidth consumption;
- determining **605**, by the processing circuitry **702**, to reduce the bandwidth threshold when the monitored latency is above a latency threshold; and
- determining **606**, by the processing circuitry **702**, to increase the bandwidth threshold when the monitored latency is constant or reduced.

**Example 18:** The method of any of examples 11-17, wherein the latency critical system **103** is an emergency stop system or a tele operation system or a real time system.

**Example 19**: A computer program product comprising program code for performing, when executed by a processing circuitry **702**, the method of any of examples 11-18.

**Example 20:** A non-transitory computer-readable storage medium comprising instructions, which when executed by a processing circuitry **702**, cause the processing circuitry **702** to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) for handling bandwidth of a wireless communication link (105) for a vehicle (100), wherein the computer system (700) comprises processing circuitry (702) configured to:
determine which state a latency critical system (103) of the vehicle (100) is in; and
when the latency critical system (103) is determined to be in an active state, determine to limit the bandwidth of the wireless communication link (105) between the vehicle (100) and a wireless communication network (108) such that at least a part of the limited bandwidth is reserved for the latency critical system (103) in active state and a non-latency critical system is at least partly limited from consuming the limited bandwidth.

2. The computer system (700) of claim 1, wherein the processing circuitry (702) is further configured to:
when the latency critical system (103) is determined to be in an inactive state, determine to inactivate the bandwidth limitation or to continue with the inactivation of the bandwidth limitation.

3. The computer system (700) of any of the preceding claims, wherein,
wherein multiple latency critical systems (103) of the vehicle (100) are in active state, wherein the processing circuitry (702) is further configured to:
determine a priority associated with each of the latency critical systems that are in active state; and to
determine to apply the bandwidth limitation to the latency critical systems in increasing priority order.

4. The computer system (700) of any of the preceding claims, wherein the bandwidth limitation comprises one or more of:
• a bandwidth threshold that the bandwidth consumption should not exceed; and/or
• disabling upload and/or download of data having a size above a size threshold.

5. The computer system (700) of claim 4, wherein the processing circuitry (702) is further configured to determine the bandwidth threshold by:
• performing N simulations of the vehicle's (100) bandwidth consumption, wherein the N simulations are performed for M number of predefined bandwidth thresholds, and wherein N and M are positive integers;
• logging latency data for each simulation N;
• determining a maximum latency amongst the logged latency data; and
• if the maximum latency for simulation N is lower than a latency threshold, determining the bandwidth threshold to be the predefined bandwidth threshold used in simulation N.

6. The computer system (700) of any of claims 4-5, wherein the processing circuitry (702) is further configured to dynamically set the bandwidth threshold based on available bandwidth or predicted bandwidth.

7. The computer system (700) of any of claims 4-6, wherein the processing circuitry (702) is further configured to:
monitor latency during the vehicle's bandwidth consumption;
determine to reduce the bandwidth threshold when the monitored latency is above a latency threshold; and to
determine to increase the bandwidth threshold when the monitored latency is constant or reduced.

8. The computer system (700) of any of the preceding claims, wherein the processing circuitry (702) is further configured to determine the state of the latency critical system (103) based on state information obtained from the latency critical system (103).

9. A vehicle (100) comprising the computer system (700) of any of claims 1-8 and a latency critical system (103).

10. A computer-implemented method for handling bandwidth of a wireless communication link (105) for a vehicle (100), the method comprising:
*determining* (600), by processing circuitry (702) of a computer system (700), which state a latency critical system (103) of the vehicle (100) is in; and
when the latency critical system (103) is determined to be in an active state, *determining* (603), by the processing circuitry (702), to limit the bandwidth of the wireless communication link (105) between the vehicle (100) and a wireless communication network (108) such that at least a part of the limited bandwidth is reserved for the latency critical system (103) in active state and a non-latency critical system is at least partly limited from consuming the bandwidth.

11. The method of claim 10, further comprising:
when the latency critical system (103) is determined to be in an inactive state, *determining* (607), by the processing circuitry (702), to inactivate the bandwidth limitation or to continue with the inactivation of the bandwidth limitation.

12. The method of any of claims 10-11, wherein multiple latency critical systems (103) of the vehicle (100) are in active state, wherein the method comprises:
*determining*, by the processing circuitry (702) a priority associated with each of the latency critical systems that are in active state; and
*determining*, by the processing circuitry (702) to apply the bandwidth limitation to the latency critical systems in increasing priority order.

13. The method of any of claims 10-12, wherein the bandwidth limitation comprises one or more of:
• a bandwidth threshold that the bandwidth consumption should not exceed; and/or
• disabling upload and/or download of data having a size above a size threshold.

14. A computer program product comprising program code for performing, when executed by a processing circuitry (702), the method of any of claims 10-13.

15. A non-transitory computer-readable storage medium comprising instructions, which when executed by a processing circuitry (702), cause the processing circuitry (702) to perform the method of any of claims 10-13.
